## Europäisches Patentamt
## European Patent Office
## Office européen des brevets

(11) Publication number: **0 125 551**
**B1**

(12) **EUROPEAN PATENT SPECIFICATION**

(45) Date of publication of patent specification: **04.11.87**

(21) Application number: **84104794.7**

(22) Date of filing: **28.04.84**

(51) Int. Cl.⁴: **B 60 B 29/00**

(54) **Articulated portable trolley, designed to facilitate changing the wheels of trucks, coaches, tractors and similar vehicles.**

(30) Priority: **17.05.83 IT 4402283**

(43) Date of publication of application:
**21.11.84 Bulletin 84/47**

(45) Publication of the grant of the patent:
**04.11.87 Bulletin 87/45**

(84) Designated Contracting States:
**AT BE CH DE FR GB LI NL SE**

(56) References cited:
**FR-A-2 301 397**
**GB-A- 979 020**
**US-A-2 538 473**
**US-A-2 846 099**
**US-A-3 836 027**

(73) Proprietor: **Palmieri, Pierino**
**via Litoranea N. 163**
**I-60026 Marcelli di Numana (Ancona) (IT)**

(72) Inventor: **Palmieri, Pierino**
**via Litoranea N. 163**
**I-60026 Marcelli di Numana (Ancona) (IT)**

(74) Representative: **Maschio, Stefano**
**44, via Milite Ignoto**
**I-61100 Pesaro (IT)**

Courier Press, Leamington Spa, England.

## Description

The invention concerns an articulated portable trolley of the type known from US—A—3 836 027 and described in the first part of independent Claim 1.

Changing a wheel of a truck or large vehicle, in the case of a sudden puncture, is a particularly time-consuming and laborious operation. Indeed, the tires, and in particular those without inner tubes, which have a special metallic rim with numerous bolts to guarantee the necessary hold, are of considerable weight and a notable effort is needed in order to pull out and replace them manually in the correct position. The difficulty increases considerably when it is necessary to change the inner wheel of a pair of dual wheels.

A truck wheel dolly is known as described in US—A—3,836,027 for use in lifting, transporting and remounting heavy truck wheels and tires. The dolly includes its own self-contained hydraulic jack with lever and like coupling means for lifting an elevatable frame supported by links to a base frame.

With this device is not easy to rotate the wheel resting on rails in order to align the holes of the rim with the corresponding connections of the hub. Furthermore this device is not designed to be dismantled and folded to fit it into a small container.

A truck or dolly device is also known as described in GB—A—979 020 comprising a U-shaped base frame with spaced vertical guides adapted to be rolled under the wheel or tire to be supported and a load supporting assembly, with means for tilting the load supporting assembly with respect to the base frame so as to align the horizontal load bearing arms with the tire.

The structure of this device is complex and encumbering, so it is not easy to construct and to use it.

A jack for truck, automobile, bus or other vehicle wheels is known, as described in US—A—2 846 099. This jack is constituted of a frame including a U-shaped base including a pair of spaced parallel legs, a web extending between said legs, front and rear vertically disposed posts extending upwardly from each of said legs and secured thereto, horizontally disposed spaced parallel rods extending between said front and rear posts and secured thereto, a shaft journaled between a set of front and rear posts, a handle connected to the outer end of said shaft, a pair of reels mounted on said shaft, a pair of spaced parallel cables having their ends connected to said reels, a pair of tubes arranged in spaced parallel relation in respect to each other and having said cables extending therethrough, a plurality of rollers extending between said tubes and supported thereby, a handle piece connected to said posts, inclined brackets secured to said posts, a spring pressed manually operable plunger adjustably connected to each pair of brackets, and a pair of roller members carried by each of said plungers for engagement with a side of a tire.

This device is suitable, because of its encumberant structure, for use in workshops but not for carrying about as an accessory on board of vehicles. In addition, it is not easily adaptable for wheels which vary greatly in diameter, it has parts which could interfere with the mudguards of the vehicle and is complicated to build.

A device is also known, as described in US—A—2 538 473. This device, in order to maintain the tire in a vertical position, uses a series of sliding support rods on the mounts placed in various positions, for adaption to the various dimensions of the tire. The rods, which rise upwards notably, can interfere with the mudguard or other parts of the vehicle, are subject to bending and do not always allow a precise positioning of the tire because it is not possible to regulate their position with continuity, as they are inserted into the fixed mounts.

The aim of the present invention is to create a device to make the changing of truck, coach and similar vehicle wheels easier, capable of being contained in a container of small dimensions to be carried on board a vehicle and, in this way, to have it always to hand in case of necessity, adjustable with continuity to adapt it perfectly to wheels of varying dimensions, without parts which might — interfere with the mudguard or other parts of the vehicle and easy to construct and use.

This aim is achieved by an articulated portable trolley with the features described in independent Claim 1.

Particular embodiments of the invention are characterized by the features of the dependent Claims.

The device is constituted of an articulated portable trolley, which in the dismantled position can be placed in a small container and, when necessary, can be rapidly assembled without the use of tools. The trolley is inserted under the wheel to be changed after it has been raised from the ground by a normal jack and is adjusted according to the size of the wheel. Because of the articulatory movement with which it is equipped, the two arms with rollers inserted under the wheel rise until they come into contact with it and support it during dismantling. Then the bolts are unscrewed and moving the trolley sideways on the wheels with which it is equipped, the wheel is removed and placed on the ground, making the jack which controls the articulatory movement return to the lowered resting position.

The new wheel to be mounted is then placed on the two lowered arms of the trolley, which is moved sideways towards the vehicle and the two arms with rollers are raised with the jack and, supporting the wheel, bring it up to the same height as the hub. One of the two rollers on which the tire rests can be rotated manually to make the wheel turn and, in this way, align the holes of the rim with the connections of the hub. At this point, the trolley is advanced further to insert the wheel which can, in this way, be blocked.

The trolley is then lowered, removed, dismantled and replaced in its container.

The invention will now be described in detail with the aid of the attached drawings, which, by way of example only, represent one possible constructive solution.

Fig. 1 shows the mounted articulated trolley in perspective.

Fig. 2 shows the trolley in the operating position while supporting the wheel of a large vehicle.

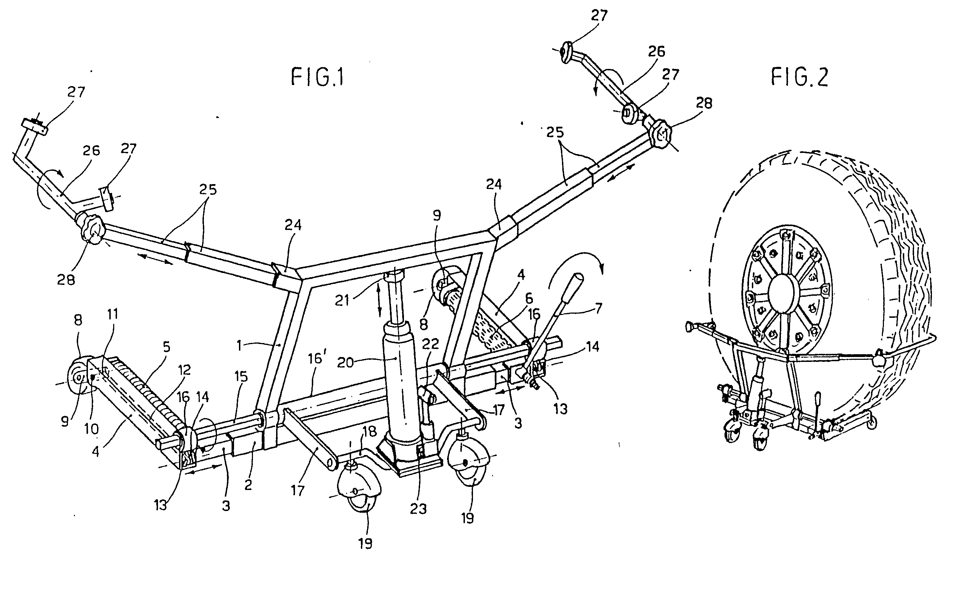

As is clear in Fig. 1, the device is constituted of a fixed frame 1, placed in a slightly inclined position to support the convex side of the tire. Integral to the frame 1 is the lower cross-bar 2, to the extremities of which may be telescopically inserted the couplings 3 of the arms 4. The couplings 3 can slide freely inside the cross-bar 2, so as to be able to vary the distance between the two arms 4, in relation to the size of the wheel to be changed, and can also be removed completely to dismantle the device.

Applied to the inner part of the two arms 4 are, respectively, a roller 5, free to rotate on its own axis, and a roller 6, which can be rotated by moving alternatively the lever 7 which has at its base an automatically tripped insertion device to make the roller 6 rotate in a single direction.

The tire, which rests on the rollers 5 and 6 applied to the two arms, can, in this way, be made to rotate by means of the lever 7 to obtain the alignment of the holes of the rim with the connections of the hub, during the mounting phase. To this end, the roller 6, which gives the rotatory movement to the tire, has a roughened surface to avoid slipping.

To the anterior extremities of the arms 4 are applied the wheels 8, supported by the forks 9 pivoted in 10 on the arms 4. The inner extremities of the forks 9 are pivotted in 11 at the anterior extremities of the levers 12, inserted inside the arms 4. The other extremities of the levers 12 are pivoted in 13 to the levers 14, which can be rotated by means of the square bar 15, inserted in the bearings 16. In this way, by rotating the square bar 15 in both directions, the levers 12 are pushed forwards and backwards, consequently varying the inclination of the forks 9 and, therefore, the height from the ground of the arms 4, which with the rollers 5 and 6 support the tire. The rotation of the square bar 15 is obtained by means of the sleeve 16' with levers 17, at the extremities of which is inserted a bar 18 which supports the pivoting wheels 19 and the base of the hydraulic jack 20. The extremity of the piston-rod of the jack is inserted into the connection 21 integral to the fixed frame 1. In this way, using the operating lever 22 of the jack, the levers 17 are moved away from the frame 1, the square bar 15 is rotated and the arms 4 are raised. To relower the arms 4, operate the jack-control 23 which determines the re-entry of the rod into the cylinder.

The square bar 15 can be completely removed to dismantle the device and even the extremity of the piston-rod can be removed from the connection 21 so that the levers 17 and the jack itself may be folded down inside the frame 1, to obtain minimum encumbrance.

The frame 1 can be equipped with connections 24 for the rapid insertion of the adjustable arms 25, at the extremities of which are applied a number of forks 26 with small wheels 27 designed to ensure a better support of the tire, without impeding the rotation to align the holes. The forks 26 can be rotated on their own axes to facilitate the introduction into the restricted space between the tire and the mudguard of the vehicle and then can be blocked in the working position by means of the screw-in knobs 28.

**Claims**

1. Articulated portable trolley designed to facilitate changing the wheels of trucks, coaches, tractors and similar vehicles, comprising a frame (1) equipped with two parallel arms (4) having wheels (8) at their anterior extremities and a device with a jack (20) for raising and lowering the arms (4) after their insertion under the wheel to be changed, previously raised, and by operation of the jack lowering the wheel to the ground or raising it up to the same height as the hub, said trolley being further equipped with small self-orienting wheels (19) which allow the trolley to be moved sideways without effect, even while supporting the heavy wheel of a large vehicle, characterised by the fact that the two arms (4) are applied with two rollers (5, 6) which support the tyre to be changed and by the fact the wheels (8) applied at the anterior extremities of the arms (4) with rollers (5, 6) are supported by pivoted forks (9) each connected with a lever (12) placed within the arms themselves, said levers receive motion via bearings (16) mounted with the possibility of sliding along a prismatic bar (15) which is made to rotate by operation of the jack (20).

2. Trolley according to Claim 1, characterised by the fact that one of the two rollers (roller 6) applied to the arms (4) which support the tyre to be changed can be manually rotated (lever 7) to give a slow rotary movement to the wheel resting on the rollers (5, 6) in order to align the holes of the rim of the wheel with the corresponding connections of the hub.

3. Trolley according to Claim 1, characterised by the fact that the frame (1) can be attached with adjustable arms (25) with forks (26) equipped with small wheels (27) designed as support clamps for the wheel and to ensure a better support for the tyre without impending the rotation of the tyre for aligning the holes; said forks (26) can be rotated and subsequently blocked in the most suitable position (screw-in knob 28) to facilitate their introduction into the restricted space between the tyre and the mudguard.

4. Trolley according to Claim 1, characterised by the fact that couplings (3) of the arms (4) are telescopically inserted in the lower cross-bar (2) of the frame (1) and that the prismatic bar (15) is removable and interchangeable, so that the trolley can be rapidly adjusted to the size of the wheel to be changed as well as dismantled and folded to fit into a small container.

**Patentansprüche**

1. Tragbarer, gelenkiger Hubwagen zum Erleichtern des Radwechsels von Lastkraftwagen, Reisebussen, Schleppern und ähnlichen Fahrzeugen, bestehend aus einem Rahmen (1), der mit zwei parallelen Armen (4) mit Rädern (8) an ihren äußeren Enden ausgestattet ist, und aus einer Anordnung mit einer Hebervorrichtung (20) zum Anheben und Absenken der Arme (4) nach ihrem Einschieben unter das zu wechselnde Rad, das vorher angehoben wurde, und wobei das Rad durch Betätigen der Hebervorrichtung bis zum Boden angesenkt oder in dieselbe Höhe wie das Radlager angehoben werden kann, wobei der Hubwagen ferner mit kleinen, sich selbst ausrichtenden Rädern (19) ausgerüstet ist, welche eine Seitwärts-Bewegung des Hubwagens ohne Kraftaufwand erlauben, selbst wenn das schwere Rad eines großen Fahrzeugs gehalten wird, dadurch gekennzeichnet, daß die zwei Arme (4) mit zwei Rollen (5, 6) versehen sind, die den zu wechselnden Reifen tragen und daß die an den äußeren Enden der mit den Rollen (5, 6) versehenen Arme (4) angebrachten Räder (8) von federgestützten Gabeln (9) gehalten werden, von welchen jede mit einem innerhalb der Arme selbst angeordneten Hebel (12) verbunden ist, wobei diese Hebel über Lager (16) bewegt werden, die auf einer prismatischen Lagerschiene (15) gleitbar angeordnet sind, die bei einer Betätigung versetzt wird.

2. Hubwagen nach Anspruch 1, dadurch gekennzeichnet, daß eine der zwei Rollen (Rolle 6), die an den den zu wechselnden Reifen tragenden Armen angeordnet sind, manuell gedreht werden kann (Hebel 7), um dem auf den Rollen (5, 6) ruhenden Rad eine langsame Drehbewegung zum Ausrichten der Radfelgen-Ausnehmungen auf die entsprechenden Verbindungen des Radlagers zu geben.

3. Hubwagen nach Anspruch 1, dadurch gekennzeichnet, daß der Rahmen (1) mit verstellbaren Armen versehen werden kann, die mit kleinen Rädern (27) ausgestattete Gabeln (26) aufweisen, die als Klemmhalter für das Rad ausgebildet sind und eine bessere Halterung des Reifens sicherstellen, ohne die Drehbewegung des Reifens am Ausrichten der Ausnehmungen zu behindern; daß die Gabeln (26) gedreht und anschließend in der am besten passenden Stellung festgehalten werden können (Schraubknopf 28), um ihre Einführung in den engen Zwischenraum zwischen dem Reifen und dem Kotflügel zu erleichtern.

4. Hubwagen nach Anspruch 1, dadurch gekennzeichnet, daß Verbindungen (3) der Arme (4) teleskopartig in die untere Querschiene (2) des Rahmens (1) eingeschoben sind und daß die prismatische Lagerschiene (15) abnehmbar und austauschbar ist, so daß der Hubwagen schnell an die Größe des zu wechselnden Rades angepaßt sowie in Einzelteile zerlegt und zusammengeklappt werden kann, um in einen kleinen Behälter zu passen.

**Revendications**

1. Chariot articulé et portatif destiné à faciliter le changement des roues des poids-lourds, des autocars, des tracteurs et d'autres véhicules similaires, comportant un cadre (1) équipé de deux bras parallèles (4), dont les extrémités antérieures sont munies de roulettes (8), et d'un cric (20) destiné à abaisser et relever les bras (4) après leur mise en place sous la roue à changer, préalablement relevée, afin d'abaisser la roue au niveau du sol ou de la remonter au niveau du moyeu par l'action du cric, ce chariot comportant en outre des roulettes pivotantes auto-orientables (19) destinées à autoriser le mouvement latéral du chariot, même lorsqu'il supporte la roue pesante d'un véhicule lourd, caractérisé par le fait que les deux bras (4) comportent des rouleaux (5, 6) aptes à supporter le pneu à changer, et par le fait que des roulettes (8) fixées aux extrémités antérieures des bras (4) à rouleaux (5, 6) sont montées sur des fourches pivotantes (9), chacune étant reliée à un levier (12) à l'intérieur du bras lesdits leviers étant entraînés en mouvement grâce aux paliers (16) montés coulissant le long d'une barre prismatique (15), destinée à être entraînée en rotation par l'actionnement du cric (20).

2. Chariot selon la revendication 1, caractérisé par le fait que l'un des deux rouleaux (rouleau (6)) solidaires du bras (4) qui supportent le pneu à changer peut être tourné manuellement, au moyen d'un levier (7), pour donner un léger mouvement de rotation à la roue reposant sur les rouleaux (5, 6), afin d'aligner les ouvertures de la jante avec les éléments mâles correspondants du moyeu.

3. Chariot selon la revendication 1, caractérisé par le fait que le cadre (1) peut être équipé avec des bras ajustables (25) comportant des crochets (26) équipés de galets (27) destinés à maintenir la roue et à assurer un meilleur guidage des pneus, sans empêcher la rotation nécessaire pour aligner les trous, lesdits crochets (26) pouvant tourner sur leur axe pour faciliter leur introduction dans l'espace restreint entre le pneu et le passage de roue du véhicule et peuvent alors être bloqués dans la position nécessaire au moyen des molettes (28).

4. Chariot selon la revendication 1, caractérisé par le fait que les coulisses (3) des bras (4) sont montées télescopiquement dans la traverse inférieure (2) du cadre (1) et par le fait que la barre prismatique (15) est amovible et interchangeable, de telle sorte que le chariot peut être rapidement adapté à la dimension de la roue à changer, de même qu'il peut être démonté et plié pour entrer dans un boîtier de faible dimension.

FIG.1

FIG.2

0 125 551